# EUROPEAN PATENT SPECIFICATION

(11) **EP 1 265 016 B1**
(45) Date of publication and mention of the grant of the patent: **04.08.2004**
(21) Application number: 01830355.2
(22) Date of filing: 31.05.2001
(51) Int. Cl.: F16K 33/00

(54) **Float, particularly for level control in bottles of liquefied gas and the like**
Schwimmer, insbesondere für die Füllstandskontrolle in Behältern mit flüssigem Gas oder ähnlichem
Flotteur, en particulier pour le jaugeage de niveau dans des réservoirs à gas liquéfié et assimilés

(43) Date of publication of application: 11.12.2002
(73) Proprietor: CAVAGNA GROUP SWITZERLAND SA, 6900 Lugano (CH)
(72) Inventor: Cavagna, Davide, 25010 Ponte S. Marco Di Calcinato (IT)
(74) Representative: Modiano, Guido, Dr.-Ing.

(56) References cited:
- DE-A- 2 138 945
- FR-A- 1 406 202
- US-A- 2 626 594
- US-A- 3 688 795

## Description

The present invention relates to a float, particularly for level control in bottles of liquefied gas and the like.

It is known that, currently, floats designed to act as level sensors are increasingly often introduced in bottles of liquefied gases and the like.

Such floats are generally made of expanded materials or by interconnecting molded parts made of plastics, bearing in mind that a density of approximately 0.3 kg/dm³ is required for good operation.

These solutions, which are currently widely adopted, are capable of withstanding limited pressure values but are unable to withstand without deforming higher pressures, such as approximately 50 bar, which would inevitably cause the compression of the float body, with a consequent considerable increase in density and malfunction of the level unit.

US-2,626,594, considered as closest prior art, discloses a float as defined in the preamble of claim 1, with the float body constituted by a plurality of spherical bodies.

US-4,343,409 discloses a reservoir made of a plurality of hollow bulbs mutually intersected.

The aim of the invention is to eliminate the above mentioned drawbacks, by providing a float, particularly for level control in bottles of liquefied gases and the like, which allows to produce the body of the float by using plastics, so as to achieve high resistance to compression thereby complying with the strictest standards.

Within this aim, a particular object of the invention is to provide a float which combines optimum mechanical strength with a sufficiently low density so that it can be easily used as a level sensor in bottles and the like.

Another object of the present invention is to provide a float which, thanks to its particular constructive characteristics, is capable of giving the greatest guarantees of reliability and safety in use.

Another object of the present invention is to provide a float, particularly for level control in bottles of liquefied gas and the like, which can be easily obtained starting from commonly commercially available elements and materials and is also competitive from a merely economical point of view.

This aim and these and other objects which will become better apparent hereinafter are achieved by a float particularly for level control in bottles of liquefied gas and the like, as defined in appended claim 1.

Further characteristics and advantages will become better apparent from the description of preferred but not exclusive embodiments of a float particularly for level control in bottles of liquefied gas and the like, illustrated only by way of non-limitative example in the accompanying drawings, wherein:
Figure 1 is a schematic perspective view of a monolithic float;
Figure 2 is a partially sectional view of the float of Figure 1;
Figure 3 is a side elevation view of a float obtained by coupling a float body and a connecting element;
Figure 4 is a schematic exploded perspective view of a float, in which the float body and the connecting element are shown separated.

With reference to the figures, the float, particularly for level control in bottles of liquefied gas and the like, according to the invention, generally designated by the reference numeral 1, comprises a float body 2 which has the particularity of being manufactured by blow-molding plastic material.

In order to obtain an optimum value of resistance to compression pressure, the float body 2 is formed as a hollow body whose shape results from the side-by-side arrangement, with mutual interference, of a plurality of spherical elements 3 which therefore in practice intersect each other.

Advantageously, the axis of the spherical elements lies along a straight line and the mutual distance between the centers of adjacent spherical bodies 3 is smaller than the diameter of a spherical body and greater than its radius.

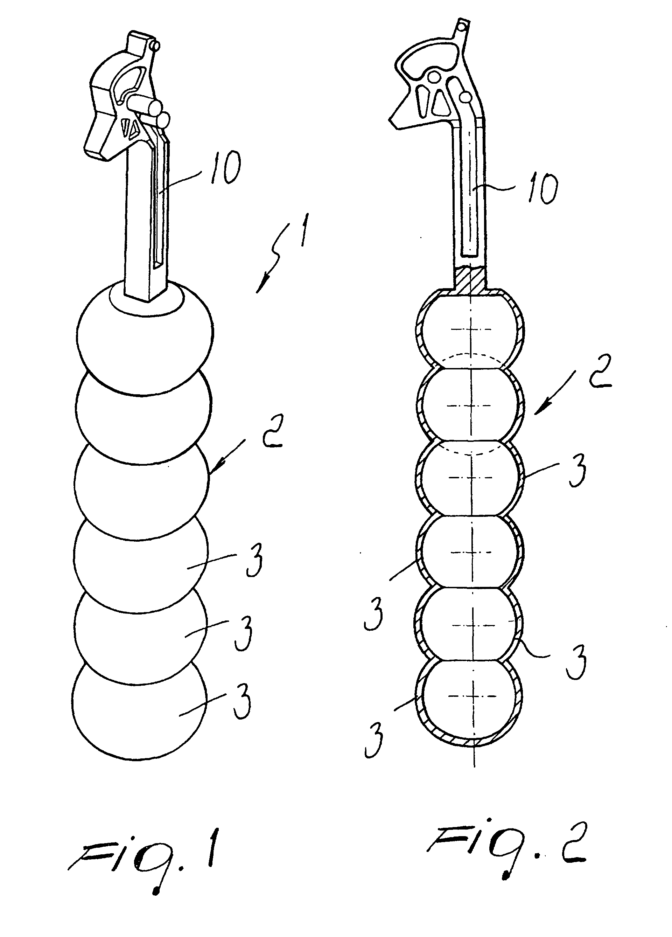

The float body 2 is connected by a connecting element 10 to a valve unit which is formed monolithically with the spherical bodies 3 in the embodiment shown in Figures 1 and 2.

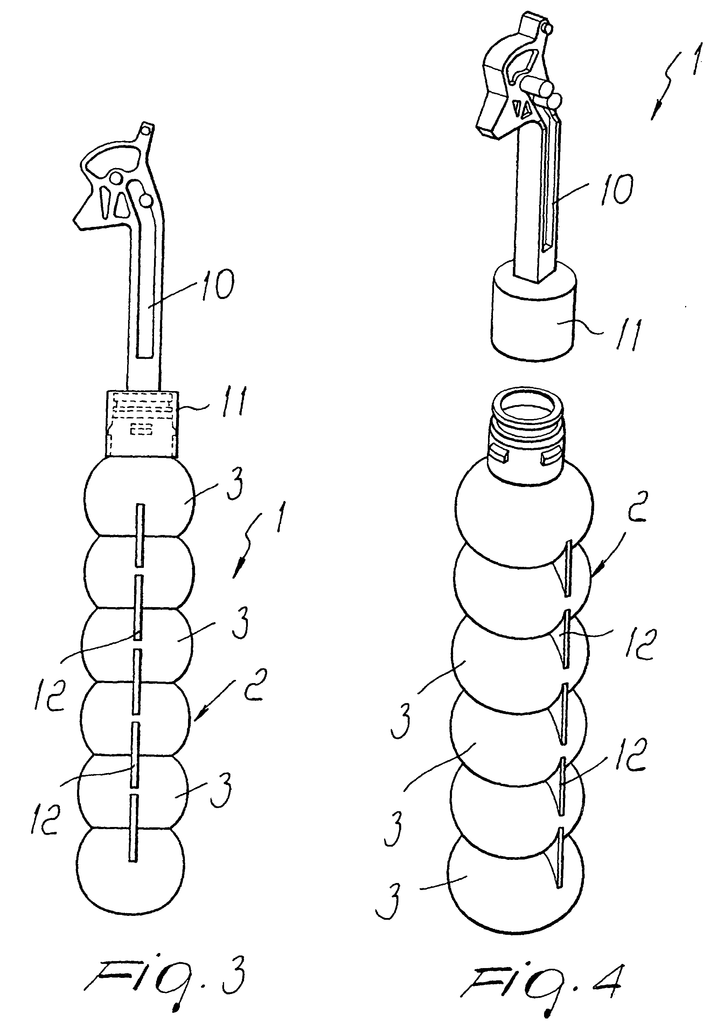

Optionally, as indicated in Figures 3 and 4, the connecting element 10 can be provided with a coupling tang 11 which allows connection to the float body, designated by the reference numeral 2.

The connecting element can be directly overmolded with respect to the float body or can optionally be connected mechanically.

As shown in Figures 3 and 4, the ribs 12 formed by the closure of the blow-molding mold can optionally be left between the spherical bodies or can be removed, as shown in Figures 1 and 2.

With the above described solution, therefore, the provision of undulations and ribs on the blow-molded plastics allows to achieve the necessary mechanical strength despite having a low density.

From the above description it is thus evident that the invention achieves the intended aim and objects, and in particular the fact is stressed that the use of plastics blow-molding technology allows to obtain a product with undulations and ridges which is capable of providing the intended mechanical strength while having a low density.

The invention thus conceived is susceptible of numerous modifications and variations, all of which are within the scope of the appended claims.

All the details may further be replaced with other technically equivalent elements.

In practice, the materials used, as well as the dimensions and the contingent shapes, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A float particularly for level control in bottles of liquefied gas and the like, comprising a float body (2) associated with an element (10) for connection to a valve unit, **characterized in that** said float body (2) is constituted by an internally hollow element made of plastics whose shape is defined by a plurality of mutually intersecting spherical bodies (3) with the centers arranged along a straight line.

2. The float according to claim 1, **characterized in that** said centers of said spherical bodies (3) are arranged on the extension of said connecting element (10).

3. The float according to one or more of the preceding claims, **characterized in that** said connecting element (10) is formed monolithically with said float body (2).

4. The float according to one or more of the preceding claims, **characterized in that** said float body (2) is produced by blow-molding plastic material.

5. The float according to one or more of the preceding claims, **characterized in that** said float body (2) has ribs (12) which join spherical bodies (3) arranged side by side and lie on the closure plane of the mold parts.

6. The float according to one or more of the claims 1-4, **characterized in that** said connecting element (10) is mechanically associated with said float body (2). 6

7. The float according to any of claims 1-4 or 6, **characterized in that** said connecting element (10) comprises a tang (11), said tang being connectable to said float body (2).

## Patentansprüche

1. Schwimmer, insbesondere zur Füllstandskontrolle in Flüssiggasflaschen und ähnlichem, beinhaltend einen Schwimmerkörper (2), dem ein Element (10) zur Verbindung mit einer Ventileinheit zugeordnet ist, **dadurch gekennzeichnet, dass** der Schwimmerkörper (2) aus einem innen hohlen Element aus Kunststoff besteht, dessen Form durch eine Vielzahl einander gegenseitig schneidender kugelförmiger Körper (3) gebildet wird, deren Mittelpunkte entlang einer geraden Linie angeordnet sind.

2. Schwimmer nach Anspruch 1, **dadurch gekennzeichnet, dass** die Mittelpunkte der kugelförmigen Körper (3) in Verlängerung des Verbindungselements (10) angeordnet sind.

3. Schwimmer nach einem oder mehreren der voranstehenden Ansprüche, **dadurch gekennzeichnet, dass** das Verbindungselement (10) einstückig mit dem Schwimmerkörper (2) geformt ist.

4. Schwimmer nach einem oder mehreren der voranstehenden Ansprüche, **dadurch gekennzeichnet, dass** der Schwimmerkörper (2) durch Blasformen von Kunststoffmaterial hergestellt ist.

5. Schwimmer nach einem oder mehreren der voranstehenden Ansprüche, **dadurch gekennzeichnet, dass** der Schwimmerkörper (2) Rippen (12) aufweist, welche die nebeneinander liegenden kugelförmigen Körper (3) verbinden und auf der Schließebene der Formteile liegen.

6. Schwimmer nach einem oder mehreren der Ansprüche 1 bis 4, **dadurch gekennzeichnet, dass** das Verbindungselement (10) mechanisch dem Schwimmerkörper (2) zugeordnet ist.

7. Schwimmer nach einem der Ansprüche 1 bis 4 oder 6, **dadurch gekennzeichnet, dass** das Verbindungselement (10) einen Mitnehmer (11) aufweist, der mit dem Schwimmerkörper (2) verbindbar ist.

## Revendications

1. Flotteur en particulier pour le jaugeage de niveau dans des réservoirs à gaz liquéfié et équivalent, comprenant un corps de flotteur (2) associé à un élément (10) en liaison avec une unité de valve, **caractérisé en ce que** ledit corps de flotteur (2) est constitué par un élément creux interne fait en plastique et dont la forme est définie par une pluralité de corps (3) sphérique en intersection mutuelle, et dont les centres sont disposés le long d'une ligne droite.

2. Flotteur selon la revendication 1, **caractérisé en ce que** lesdits centres desdits corps sphériques (3) sont disposés sur l'extension dudit élément (10) de connexion.

3. Flotteur selon une ou plusieurs des revendications précédentes, **caractérisé en ce que** ledit élément de connexion (10) est formé de manière monolytique avec ledit corps de flotteur (2).

4. Flotteur selon une ou plusieurs des revendications précédentes, **caractérisé en ce que** ledit corps de flotteur (2) est produit en matériau plastique par moulage soufflé.

5. Flotteur selon une ou plusieurs des revendications précédentes, **caractérisé en ce que** ledit corps de flotteur (2) présente des nervures (12) qui joignent les corps sphériques (3) disposés côte à côte et s'étendent sur le plan de fermeture des parties moulées.

6. Flotteur selon une ou plusieurs des revendications 1 à 4, **caractérisé en ce que** ledit élément de connexion (10) est mécaniquement associé au dit corps de flotteur (2).

7. Flotteur selon l'une des revendications 1 à 4 ou 6, **caractérisé en ce que** ledit élément de connexion (10) comporte un tenon (11), ledit tenon étant susceptible d'être relié au dit corps de flotteur (2).
